Europäisches Patentamt

European Patent Office

Office européen des brevets

(11) Numéro de publication: **0 432 684 A1**

## (12) DEMANDE DE BREVET EUROPEEN

(21) Numéro de dépôt: 90123682.8

(22) Date de dépôt: **10.12.90**

(51) Int. Cl.5 **H01M 4/58**, H01M 4/48, H01M 10/40

(30) Priorité: **11.12.89 FR 8916337**

(43) Date de publication de la demande:
**19.06.91 Bulletin 91/25**

(84) Etats contractants désignés:
**DE FR GB IT NL SE**

(71) Demandeur: **Société Anonyme dite SAFT**
**156, avenue de Metz**
**F-93230 Romainville(FR)**

(72) Inventeur: **Labat, Jean**
**23, rue Théophile Gautier**
**F-33160 St Medard en Jalles(FR)**
Inventeur: **Cocciantelli, Jean-Michel**
**Résidence Prince Noir, Bât. E., rue Fernand**
**Izer**
**F-33400 Talence(FR)**

(74) Mandataire: **Weinmiller, Jürgen et al**
**Lennéstrasse 9 Postfach 24**
**W-8133 Feldafing(DE)**

(54) **Générateur électrochimique rechargeable comprenant une cathode à base d'oxyde de vanadium.**

(57) Générateur électrochimique rechargeable dont l'anode (2) est à base de lithium ou d'alliage de lithium, dont l'électrolyte est constitué par une solution d'un sel de lithium dans un solvant non aqueux, et dont le matériau cathodique (1) est à base d'oxyde de vanadium, caractérisé par le fait que ledit oxyde de vanadium contient une phase $\gamma'$ issue de l'oxydation par voie chimique ou électrochimique d'une phase $LiV_2O_5$ $\gamma$ obtenue par l'insertion dans ledit oxyde d'un nombre d'atomes de lithium par mole de $V_2O_5$ compris entre 0.9 et 2.

# FIG.1

EP 0 432 684 A1

# GÉNÉRATEUR ÉLECTROCHIMIQUE RECHARGEABLE COMPRENANT UNE CATHODE À BASE D'OXYDE DE VANADIUM

La présente invention concerne un générateur électrochimique rechargeable à anode de lithium et électrolyte non aqueux, comprenant un matériau cathodique à base d'oxyde de vanadium $V_2O_5$.

De nombreux sulfures et oxydes métalliques ont été proposés comme matières actives cathodiques dans des générateurs électrochimiques rechargeables à anode de lithium. Parmi les oxydes, l'oxyde de vanadium $V_2O_5$ a été largement étudié. En effet, on espérait obtenir des électrodes possédant une énergie massique très importante en raison de la faible masse atomique et du degré d'oxydation élevé ($+5$) du vanadium dans ce matériau. Par ailleurs, $V_2O_5$ est un produit facile à se procurer et à mettre en oeuvre industriellement sous forme d'électrodes.

Il est connu qu'au cours de la première décharge d'un générateur $Li/V_2O_5$, il est possible d'insérer plus de 3 atomes de lithium par mole de $V_2O_5$ sur plusieurs paliers de tension situés respectivement à environ 3,3 Volts, 3,2 Volts, 2,3 Volts et au-dessous de 2,0 Volts; mais le système n'est réputé reversible, au cours d'un cyclage charge-décharge, qu'à la condition de limiter le fonctionnement sur les deux paliers au-dessus de 3 V correspondant à l'insertion du premier atome de lithium dans $V_2O_5$. Au-delà de cette limite, il est généralement admis que l'insertion d'une quantité plus importante de lithium entraîne des modifications irréversibles de la structure initiale du matériau provoquant une baisse progressive et rapide de capacité au cours du cyclage ( of "Lithium Vanadium Pentoxide cells" par C.R. Walk dans Lithium Batteries Academic Press 1983 p. 265 - "Vanadium Oxides in Electrodes for rechargeable lithium cells" par K. Wiesener et coll. Journal of Power Sources 20, 1987, p. 157).

Il est également connu que l'amorphisation du $V_2O_5$ cristallisé obtenue par trempe ultra-rapide de $V_2O_5$ fondu, ou par formation de solutions solides de $V_2O_5$ avec différents oxydes tels que $P_2O_5$, $TeO_2$ $GeO_2$, etc... permet d'augmenter le domaine reversible d'intercalation du lithium á environ 1,5 Li par mole de $V_2O_5$, mais, dans ce cas, la tension décroît régulièrement au cours de la décharge et la tension moyenne sur toute la durée de la décharge n'est égale qu'à environ 2,6 V (voir par exemple brevet FR-A-2.573.250).

Le but de l'invention est d'accroître l'énergie massique des générateurs électrochimiques rechargeables comportant l'oxyde de vanadium comme matériau cathodique.

La présente invention a pour objet un générateur électrochimique rechargeable dont l'anode est à base de lithium ou d'alliage de lithium, dont l'électrolyte est constitué par une solution d'un sel de lithium dans un solvant non aqueux, et dont le matériau cathodique est à base d'oxyde de vanadium cristallisé, caractérisé par le fait que ledit oxyde de vanadium contient une phase $\gamma$, issue de l'oxydation par voie chimique ou électrochimique d'une phase $LiV_2O_5$ $\gamma$ obtenue par l'insertion dans ledit oxyde d'un nombre d'atomes de lithium par mole de $V_2O_5$ compris entre 0,9 et 2.

De préférence, ce nombre est aussi proche que possible de 2. Ledit matériau permet :
. d'élever la tension de décharge du générateur,
. d'accroître la capacité utilisable en cyclage par augmentation
du domaine reversible d'intercalation du lithium dans $V_2O_5$.

Ainsi ledit matériau cathodique présente en cyclage électrochimique entre 2,0 V et 3,8 V une capacité d'au moins.0,6 Faradays/mole pour une tension de décharge supérieure à 3,3 volts.

La courbe caractéristique de décharge comporte plusieurs paliers de tension distincts situés au-dessus de 3 volts et un palier de tension situé sensiblement à 2,3 volts.

Par ailleurs ledit matériau cathodique présente en cyclage avec une profondeur de décharge limitée, c'est-à-dire inférieure à une valeur de 0,5 Faraday par mole, une tension moyenne de décharge supérieure à.3,5 volts.

Selon une première variante, ledit matériau est obtenu in situ par une décharge initiale partielle ou totale du générateur en-dessous de 3 V jusqu'au premier palier situé à environ 2,3 V et une charge ultérieure jusqu'à 3,8 V. La décharge ne doit pas être poursuivie sur le palier inférieur à environ 2 V car, dans ce cas, la structure du matériau serait détruite et les caractéristiques électrochimiques seraient profondément altérées : modification de l'allure des courbes de charge-décharge et perte de reversibilité en cyclage comme cela a déjà été mentionné précédemment.

De manière surprenante, la décharge jusqu'à 2,3 V suivie d'une charge complète jusqu'à 3,8 V appliquée à un oxyde de vanadium $\alpha$ de qualité médiocre permet de régénérer la capacité de cet oxyde et d'augmenter la tension moyenne de l'accumulateur de 0,2 volt environ.

Selon une seconde variante, ledit matériau cathodique est obtenu par oxydation chimique de $LiV_2O_5$ $\gamma$ traité par une solution d'un oxydant tel que le brome dans l'acétonitrile à température ambiante ; la concentration en brome peut être de 0,1 mole/litre.

L'électrolyte non aqueux d'un générateur selon l'invention est constitué par un solvant, choisi parmi les éthers linéaires ou cycliques, les esters ou leurs mélanges, et un soluté choisi parmi $LiAsF_6$, $LiCF_3SO_3$, $LiBF_4$, $LiPF_6$, $LiClO_4$ et leurs mélanges;

De préférence, l'électrolyte est une solution de $LiAsF_6$ dans un mélange de carbonate de propylène, carbonate d'éthylène. Selon une variante, l'électrolyte est une solution de $LiAsF_6$ dans un mélange de carbonate de propylène, carbonate d'éthylène et diméthoxyéthane.

D'autres caractéristiques et avantages de la présente invention apparaîtront au cours de la description suivante de modes de réalisation donnés à titre illustratif, mais nullement limitatif. Dans le dessin annexé :

La figure 1 montre très schématiquement en vue semi-coupée un exemple de générateur électrochimique rechargeable de type bouton.

La figure 2 montre les courbes de première décharge de deux boutons $B_1$ de l'art antérieur et $B_2$ selon l'invention respectivement jusqu'à 2,8 V et 2,0 V.

La figure 3 montre les courbes de première charge jusqu'à 3,8 V effectuée sur les boutons $B_1$ et $B_2$ après la décharge de la figure 2.

La figure 4 montre les courbes de la deuxième décharge des deux boutons $B_1$ et $B_2$ respectivement jusqu'à 2,8 V et 2,0 V.

La figure 5 montre les courbes d'évolution de la capacité spécifique du matériau cathodique des deux boutons $B_1$ et $B_2$ en fonction du nombre de cycles n.

La figure 6a montre le diagramme de diffraction "X" de l'oxyde $V_2O_5$ $\alpha$ du commerce.

La figure 6b montre le diagramme de diffraction "X" du matériau cathodique du bouton $B_1$ en fin de première décharge (point $D_1$ de la figure 2).

La figure 6c montre le diagramme de diffraction "X" du matériau cathodique du bouton $B_1$ en fin de première charge (point $C_1$ de la figure 3).

La figure 6d montre le diagramme de diffraction "X" du matériau cathodique du bouton $B_2$ en fin de première décharge (point $D_2$ de la figure 2).

La figure 6e montre le diagramme de diffraction "X" du matériau cathodique du bouton $B_2$ en fin de première charge (point $C_2$ de la figure 3).

La figure 7 montre les courbes de décharge de deux boutons $B_3$ de l'art antérieur et $B_4$ selon l'invention pendant 4 heures sous 1 mA.

La figure 8 montre les courbes de charge des deux boutons $B_3$ et $B_4$ sous 1 mA jusqu'à 3,8 V.

La figure 9 montre les courbes d'évolution de la tension en fin de décharge de 4 heures à 1 mA des boutons $B_3$ et $B_4$ en fonction du nombre de cycles.

La figure 10 montre la courbe de décharge jusqu'à 2,8 V du bouton $B_5$ de l'art antérieur réalisé avec un oxyde de vanadium de qualité médiocre.

La figure 11 montre des courbes de décharge du bouton $B'_5$ selon l'invention jusqu'à 2,0 V.

La figure 12 montre la courbe de décharge du bouton $B'_5$ jusqu'à 2,8 V après deux cycles de fonctionnement entre 2,0 et 3,8 V.

La figure 13 montre la courbe d'évolution en fonction du nombre de cycles de la capacité spécifique du matériau cathodique du bouton $B_5$ et la courbe correspondante du bouton $B'_5$ après deux cycles de fonctionnement entre 2,0 et 3,8 V.

La figure 14 montre la courbe d'évolution en fonction du nombre de cycles de la tension de décharge du matériau cathodique du bouton $B_5$ et la courbe correspondante du bouton $B'_5$ après deux cycles de fonctionnement entre 2,0 et 3,8 V.

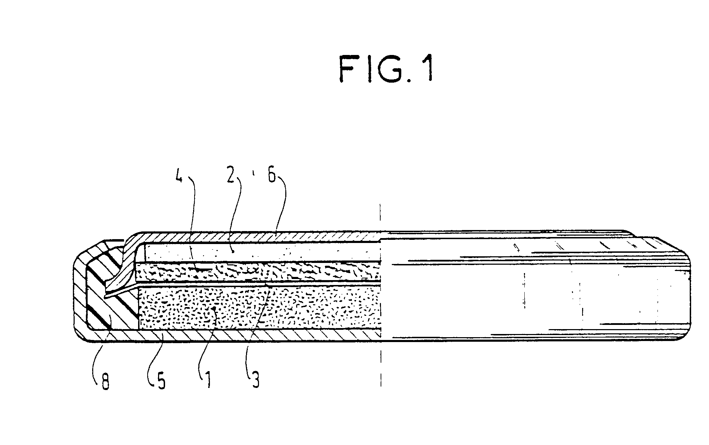

Afin de mettre en évidence les caractéristiques et avantages selon l'invention vis-à-vis de l'art antérieur, des accumulateurs boutons, du type de celui qui apparaît dans la figure 1, sont constitués de la façon suivante.

Le matériau cathodique $V_2O_5$ cristallisé commercial qualité batterie, est mélangé intimement avec du noir d'acétylène, du graphite et du PTFE dans les proportions pondérales respectives suivantes : 80 %, 7,5 %, 7,5 % et 5 %. Une cathode 1 est fabriquée en incrustant une certaine quantité de ce mélange sur une grille en acier inoxydable. Après séchage et découpe avec un outil approprié, on obtient une électrode ayant la forme d'un disque de 20 mm de diamètre et d'environ 0,5 mm d'épaisseur contenant environ 150 mg de $V_2O_5$. L'anode 2 est constituée par un disque de lithium de même diamètre et de masse 150 mg environ.

L'électrolyte utilisé dans ce cas est une solution molaire d'hexafluoroarséniate de lithium dans un mélange de carbonate de propylène, de carbonate d'éthylène et de diméthoxyéthane dans les proportions pondérales respectives de 25 %, 25 % et 50 %.

Les électrodes 1 et 2 sont séparées par un séparateur de polypropylène microporeux 3 et un séparateur réservoir 4 en fibres de polypropylène sous forme de feutre.

L'ensemble est disposé dans une coupelle 5 fermée de manière étanche par un couvercle 6 par l'intermédiaire d'un joint 8.

EXEMPLE 1

Deux accumulateurs de type bouton $B_1$ et $B_2$ sont réalisés comme décrit sur la figure 1 et sont soumis à des cycles de charge-décharge sous un courant de 1 mA en charge et 2 mA en décharge. La charge est effectuée jusqu'à une tension maximum de 3,8 V pour les deux boutons $B_1$ et $B_2$. La décharge est arrêtée à une tension minimum de 2,8 V pour le bouton B₁, conformément á l'art antérieur, et á 2,0 V pour le bouton B₂, selon l'invention.

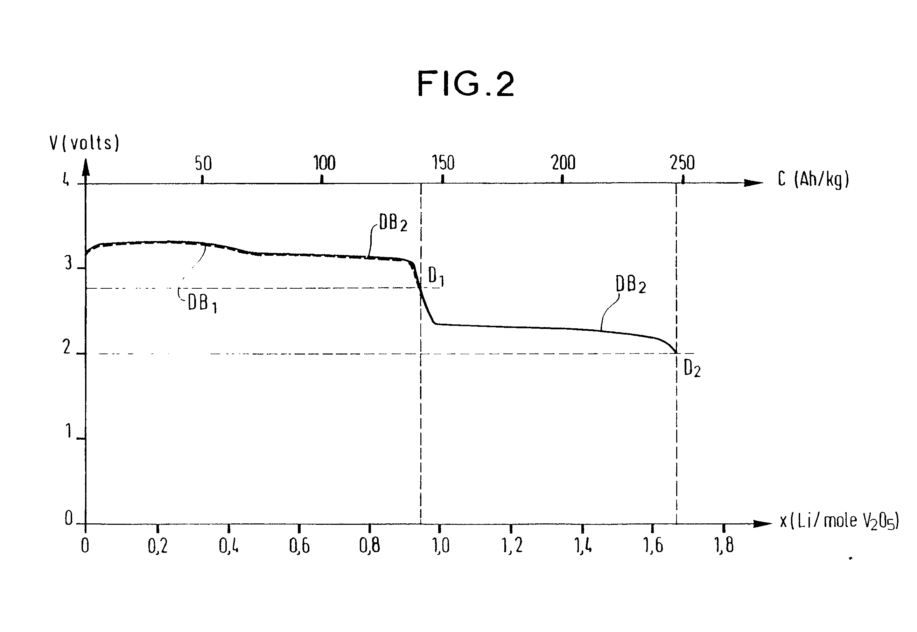

La figure 2 représente l'évolution de la tension V (en volts) en fonction du nombre d'atomes de lithium "x" intercalés par mole de $V_2O_5$ au cours de la première décharge. On a également représenté la capacité spécifique "C" (en Ah/Kg) correspondante pour $V_2O_5$. Les courbes de décharge $DB_1$ et $DB_2$ sont associées respectivement aux boutons $B_1$ et $B_2$.

On constate que, pour $B_1$ et $B_2$, la décharge jusqu'à 2,8 V (point $D_1$) s'effectue en deux paliers de tension très proches (3,3 V et 3,15 V) et permet l'insertion de 0,94 atome de lithium par mole de $V_2O_5$. Ceci correspond à une capacité spécifique de $V_2O_5$ égale à 138 Ah/kg pour le bouton $B_1$. La poursuite de la décharge du bouton $B_2$ jusqu'à 2 V (point $D_2$) s'effectue sur un autre palier de tension à environ 2,3 V et permet une insertion totale de 1,67 atome de lithium par mole de $V_2O_5$ correspondant à une capacité spécifique de $V_2O_5$ égale à 245 Ah/Kg.

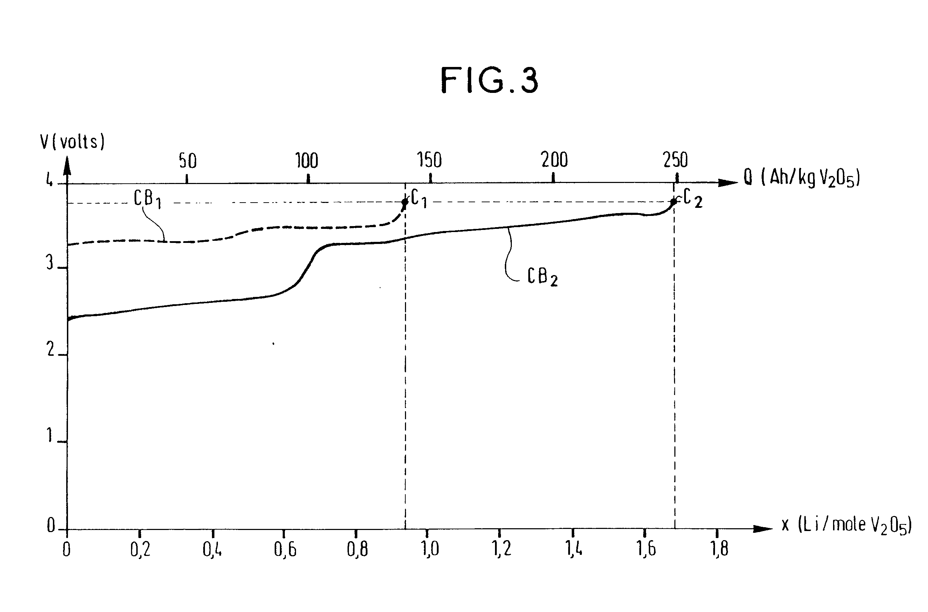

La figure 3 représente l'évolution de la tension V (en volts) en fonction du nombre d'atomes de lithium "x" désintercalés par mole de $V_2O_5$ au cours de la première charge jusqu'à 3,8 V effectuée sur les boutons $B_1$ et $B_2$ après la décharge précédente. $CB_1$ et $CB_2$ sont les courbes de charge associées respectivement à $B_1$ et $B_2$ . On a également représenté la quantité d'électricité chargée Q (en Ah/Kg de $V_2O_5$).

Sur la courbe de charge $CB_1$ du bouton $B_1$ interrompue au point $C_1$, on distingue les deux paliers observés au cours de la décharge initiale. En ce qui concerne le bouton $B_2$, sa charge s'effectue d'abord sur un palier à environ 2,6 V correspondant au palier de décharge à 2,3 V, mais la partie de la courbe supérieure à 3 V est différente de celle du bouton $B_1$. Pour les deux boutons $B_1$ et $B_2$, les quantités d'électricité chargées sont respectivement identiques aux capacités restituées au cours de la décharge précédente, ce qui montre une bonne reversibilité de l'intercalation du lithium dans les deux plages de fonctionnement étudiées 3,8 - 2,8 V et 3,8 - 2,0 V.

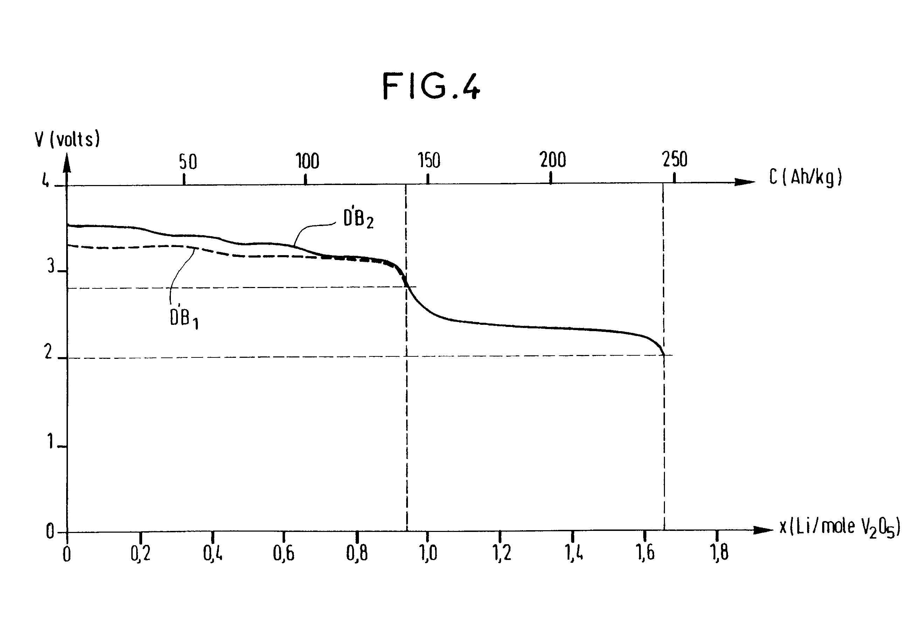

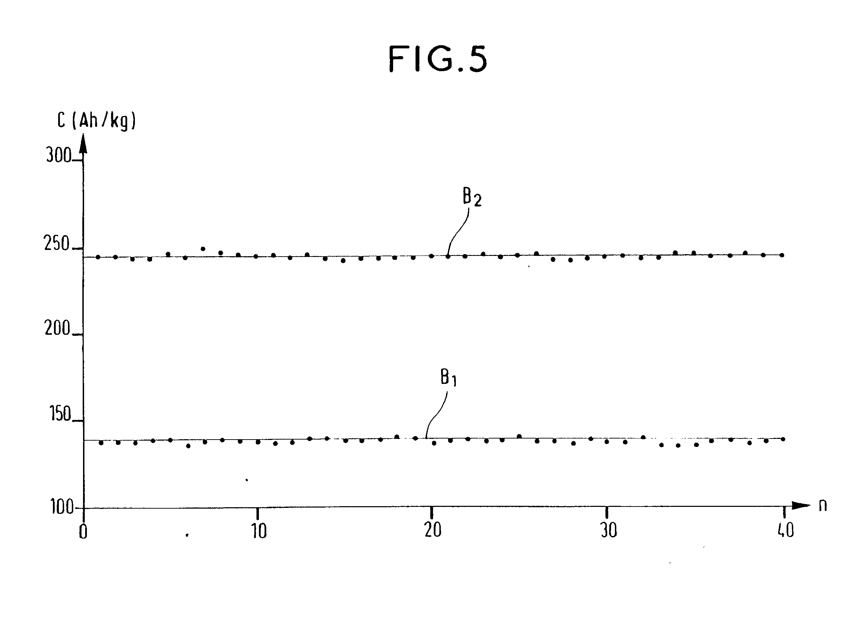

La figure 4 montre, sous la même présentation que la figure 2, les caractéristiques obtenues au cours de la deuxième décharge des boutons $B_1$ et $B_2$. Le bouton $B_1$ fonctionne de la même manière qu'au premier cycle ; la courbe de décharge $D'B_1$ est identique á la courbe $DB_1$ de la figure 2). Au contraire, comme cela apparaît sur la courbe $D'B_2$, le bouton $B_2$ présente, au-dessus de 3 V, une tension de décharge supérieure de 0,2 V environ à celle du bouton $B_1$ et à celle obtenue sur ce même bouton $B_2$ au cours de la première décharge (voir courbe $DB_2$ de la figure 2). La fin de la décharge s'effectue comme au premier cycle, sur un palier à 2,3 V environ. Les capacités restituées au cours de cette décharge sont identiques à celles du premier cycle et se maintiennent au cours du cyclage ultérieur comme le montre la figure 5 sur laquelle est représentée la capacité spécifique mesurée "C" en fonction du nombre de cycles "n" pour le matériau cathodique des boutons $B_1$ et $B_2$.

Ces résultats montrent clairement l'intérêt de l'invention qui se traduit par une augmentation considérable de l'énergie massique utilisable de $V_2O_5$. En effet, cette énergie qui correspond au produit de la capacité spécifique par la tension moyenne de décharge est égale à 440 Wh/Kg pour le bouton $B_1$ et à 710 Wh/Kg pour le bouton $B_2$, soit une augmentation supérieure à 60 %.

Deux autres avantages principaux résultent de l'invention. En effet, pour réaliser une électrode de capacité surfacique déterminée, la quantité nécessaire de $V_2O_5$ sera inférieure à celle de l'état de l'art antérieur et l'épaisseur de l'électrode sera donc plus faible. Dans le volume disponible correspondant à un format d'élément déterminé, par exemple en technologie spiralée, il devient possible de loger des électrodes de plus grande surface et corrélativement de réduire la densité de courant et les phénomènes de polarisation des électrodes pour une application déterminée. L'avantage qui en résulte est une amélioration des caractéristiques en décharge, notamment à fort régime et à basse température, ainsi qu'en durée de vie en cyclage. Le deuxième avantage est la possibilité de déterminer l'état de décharge d'une batterie à partir de sa tension de fonctionnement car la décharge s'effectue sur des paliers de tension bien distincts (voir figure 4).

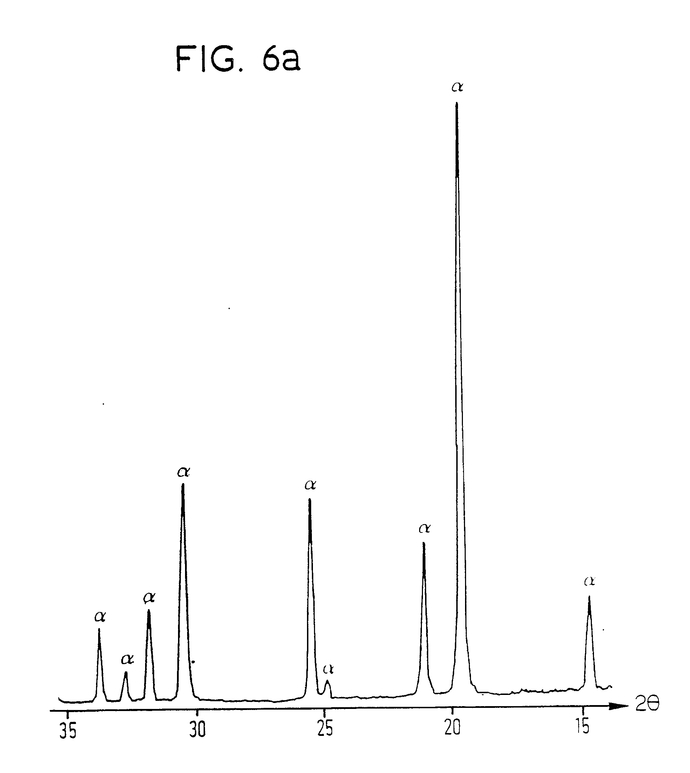

Afin de comprendre les différences de comportement électrochimique des matériaux cathodiques dans les boutons $B_1$ et $B_2$, des examens de diffraction "X" ont été effectués sur des échantillons prélevés au cours de ces essais en utilisant le rayonnement K $\alpha$ du cuivre. Dans tous les diffractogrammes des figures 6a à de qui vont suivre, on a indiqué en abscisses l'angle de diffraction 2 $\theta$. La raie repérée C correspond au graphite utilisé comme additif dans la réalisation des cathodes.

La figure 6a représente le diffractogramme "X" de l'oxyde $V_2O_5$ du commerce utilisé pour la réalisation des cathodes des boutons $B_1$ et $B_2$. Le spectre obtenu montre que ce matériau présente la structure déterminée antérieurement et bien connue de l'oxyde cristallisé $V_2O_5$ $\alpha$ (R. ENJALBERT et J. GALY, Acta Cryst. C 42, 1467 - 1986 - et les références incluses).

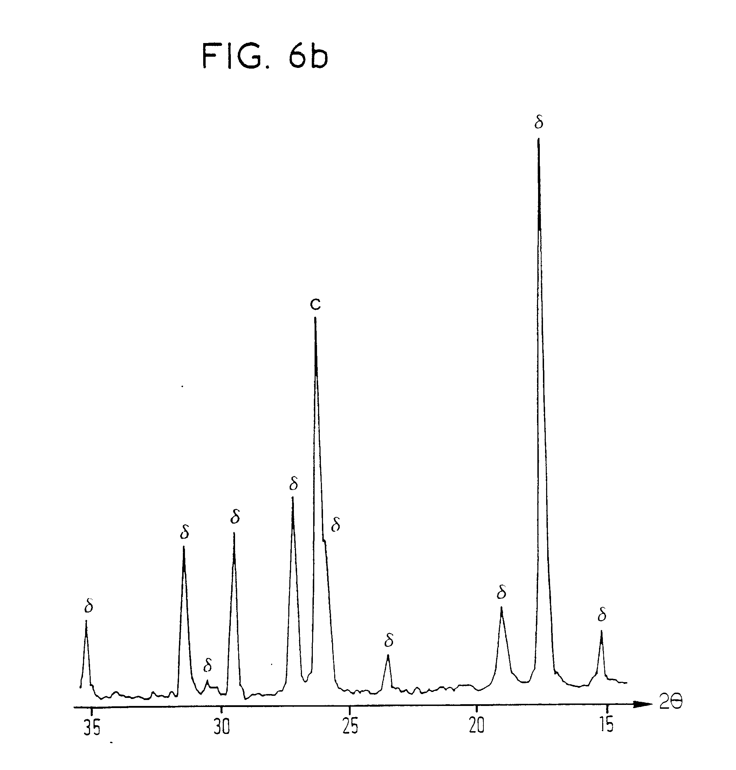

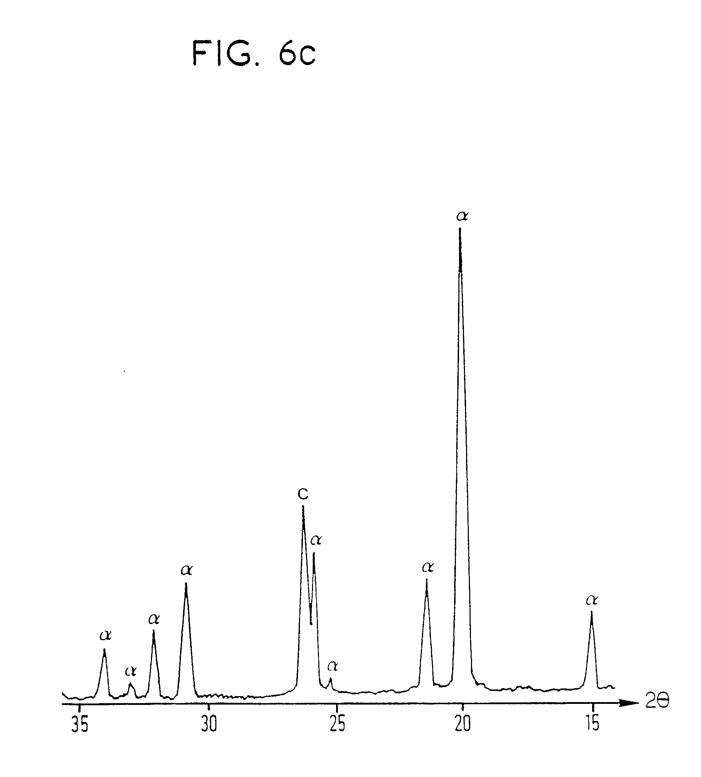

Les figures 6b et 6c donnent les diffractogrammes "X" des matériaux cathodiques obtenus en fin de décharge et en fin de charge du bouton $B_1$ correspondant respectivement au point $D_1$ de la

figure 2 et au point $C_1$ de la figure 3.

Le diffractogramme 6b permet d'identifier, dans le matériau cathodique du bouton $B_1$ déchargé jusqu'à 2,8 V, la phase $LiV_2O_5$ δ dont la structure a été déterminée par CAVA et al. (R.S. CAVA, A. SANTORO, O.W. MURPHY, S.M. ZAHURAK, R.M. FLEMING, P. MARSH, R.S. ROTH, J. Solid State Chem. 65, 6371, 1986).

Après recharge totale du bouton $B_1$, le diffractogramme 6c montre, par comparaison avec le diffractogramme 6a, que le matériau cathodique a une structure $V_2O_5$ α identique à celle du produit initial.

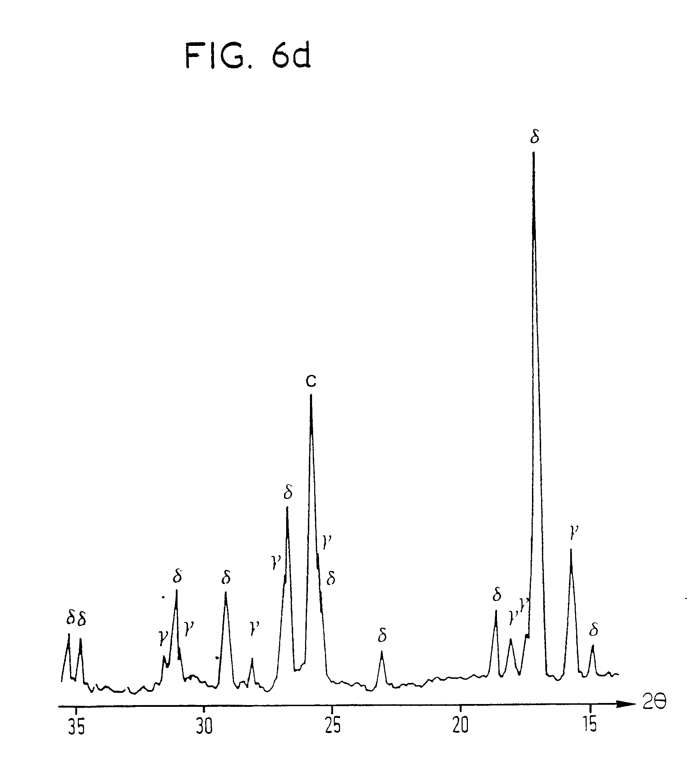

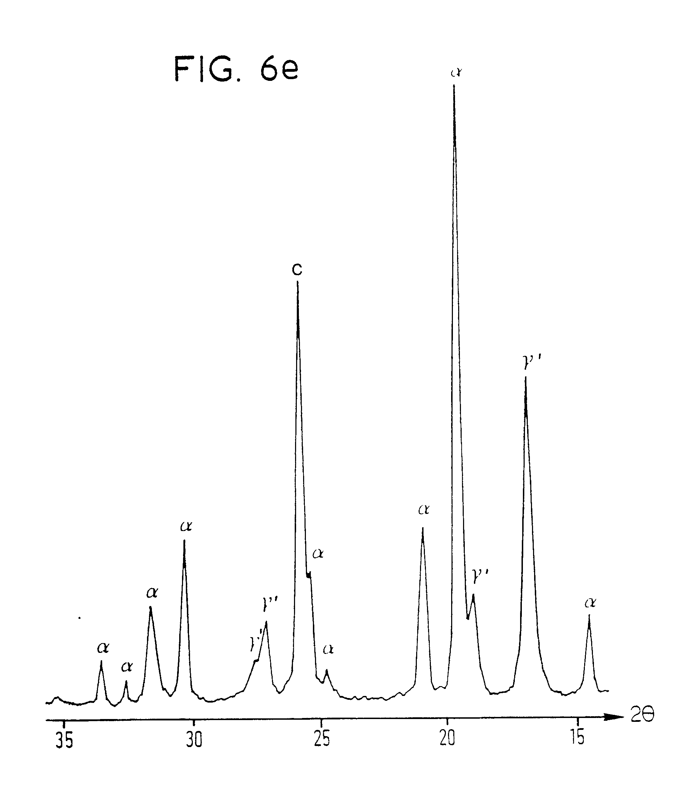

Les figures 6d et 6e donnent les diffractogrammes "X" des matériaux cathodiques obtenus en fin de décharge et en fin de charge du bouton $B_2$ selon l'invention, correspondant respectivement au point $D_2$ de la figure 2 et au point $C_2$ de la figure 3.

Le diffractogramme 6d permet de mettre en évidence, dans le matériau cathodique du bouton $B_2$ déchargé jusqu'à 2 volts, l'apparition d'une phase supplémentaire correspondant à la phase $LiV_2O_5$ γ obtenue à haute température par réaction de $LiVO_3$ et $VO_2$ (J. DARRIET, P. HAGENMULLER, Revue de Chimie minérale, 8, 529 - 1971 - et références incluses). Cette nouvelle phase apparaît lorsque la décharge est poursuivie au-delà de l'insertion d'un atome de lithium par mole de $V_2O_5$ et ce résultat est en accord avec celui obtenu par S. OKADA et J. YAMAKI (Extended Abstracts. 176th Meeting of the Electrochemical Society, Hollywood, 15-20 Octobre 1989, p. 62).

Le diffractogramme 6e montre que, contrairement au matériau du bouton $B_1$, le matériau du bouton $B_2$ ne revient pas à l'état $V_2O_5$ α initial après recharge totale. En plus des raies α on observe la présence de raies supplémentaires dont l'indexation révèle une isotypie structurale avec $LiV_2O_5$ γ déjà mentionné. Le déplacement relatif de ces raies par rapport à celles de $LiV_2O_5$ γ - (figure 6d) traduit une forte évolution des paramètres cristallins qui s'explique par la désintercalation du lithium au sein du matériau cathodique. Ce nouveau matériau obtenu par désintercalation de $LiV_2O_5$ γ contient un nouvel oxyde de vanadium que nous appellerons $V_2O_5$ γ'. La corrélation des résultats de l'analyse par diffraction "X" avec le comportement électrochimique des boutons $B_1$ et $B_2$ permet d'attribuer à la formation de cette phase γ' les améliorations caractéristiques de l'invention telles que l'augmentation du potentiel de décharge au-dessus de 3V et l'aptitude au cyclage.

EXEMPLE 2

Deux autres accumulateurs boutons $B_3$ (art antérieur) et $B_4$ (selon l'invention) présentant la structure de celui de la figure 1 ont été réalisés. Le bouton $B_3$ a subi une décharge initiale à 2 mA jusqu'à 2,8 V et une charge à 1 mA jusqu'à 3,8 V. Sur le bouton $B_4$, on a effectué une décharge à 2 mA correspondant à l'insertion de 1,3 Li mole de $V_2O_5$, soit approximativement jusqu'à la moitié du palier à 2,3 V et une charge à 1 mA jusqu'à 3,8 V. Les deux éléments $B_3$ et $B_4$ ont ensuite subi un cyclage identique en limitant la profondeur de décharge avec les caractéristiques suivantes :

. décharge en 4 heures à 1 mA, ce qui correspond à l'insertion de 0,2 atome de Li environ par mole de $V_2O_5$,
. charge de 1 mA jusqu'à 3,8 V.

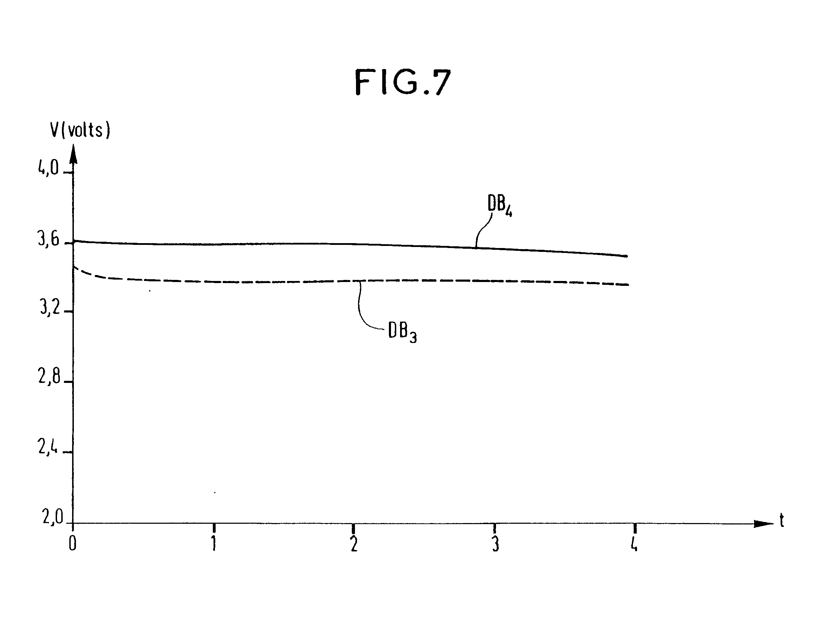

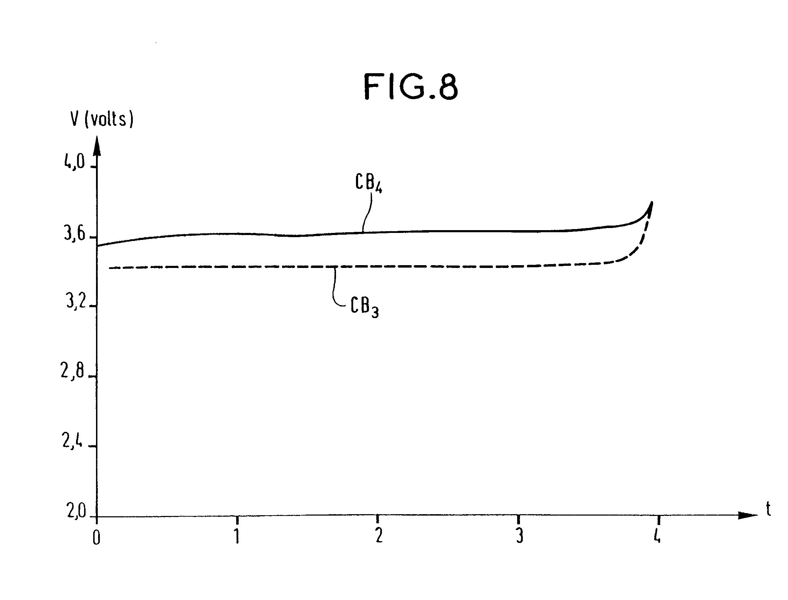

La figure 7 représente l'évolution de la tension V (en volts) en fonction du temps t (en heures) de la décharge (courbes $DB_3$ pour $B_3$ et $DB_4$ pour $B_4$). On constate que le bouton $B_4$ conforme à l'invention a une tension de décharge voisine de 3,6 V alors que le bouton $B_3$ fonctionne à une tension de l'ordre de 3,4 V. Cet écart apparaît également sur les courbes de charge $CB_3$ et $CB_4$ de la figure 8 qui représentent l'évolution de la tension V (en volts) en fonction du temps de charge t (en heures).

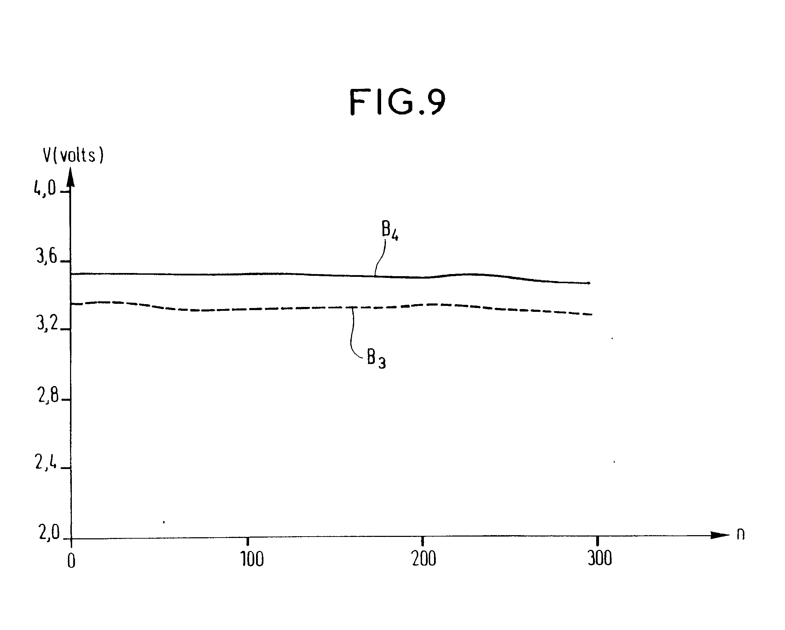

La figure 9 représente l'évolution de la tension V (volts) en fin de décharge de 4 heures à 1 mA en fonction du nombre de cycles n pour les deux boutons $B_3$ et $B_4$. On constate à nouveau l'amélioration de la tension du bouton $B_4$ par rapport à $B_3$ et la faible variation de ce paramètre après 300 cycles.

Le diffractogramme "X" du matériau cathodique du bouton $B_4$ effectué sur un échantillon prélevé après décharge jusqu'à intercalation de 1,3 atome de lithium par mole de $V_2O_5$ et recharge jusqu'à 3,8 V met en évidence la formation de la phase $V_2O_5$ γ ' citée précédemment, ce qui permet d'expliquer la différence de comportement, au cours du cyclage, des boutons $B_3$ et $B_4$ et, en particulier l'augmentation du potentiel de fonctionnement qui est une des caractéristiques de l'invention.

EXEMPLE 3

Un accumulateur $B_5$ selon l'art antérieur du même type que les précédents est réalisé avec un oxyde de vanadium provenant d'un lot de fabrication différente et a subi 31 cycles avec décharge à 2 mA jusqu'à 2,8 V et charge à 1 mA jusqu'à 3,8 V.

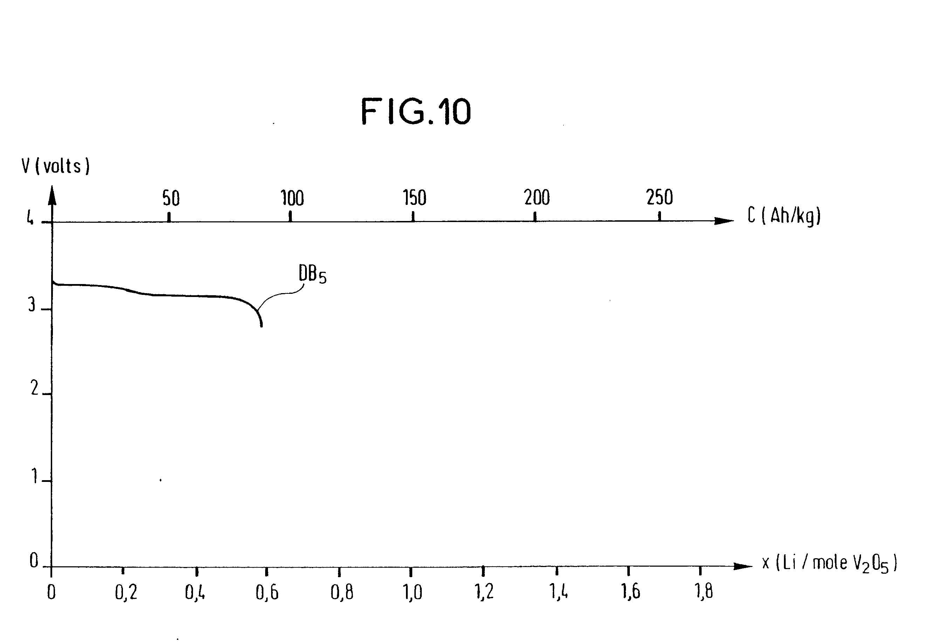

La capacité restituée par cet oxyde de vanadium est sensiblement inférieure à celle de l'oxyde testé précédemment comme le montre la figure 10 qui représente la caractéristique de décharge $DB_5$ du bouton $B_5$ au 25ème cycle. La qualité inférieure de ce dernier oxyde a été attribuée, après analyses chimiques et étude par résonance paramagnétique électronique, à la présence d'une proportion plus importante d'ions $V^{4+}$ dans le produit initial. La capacité spécifique mesurée est égale à 87 Ah/Kg et correspond à l'insertion de 0,6 atomes de lithium par mole de $V_2O_5$.

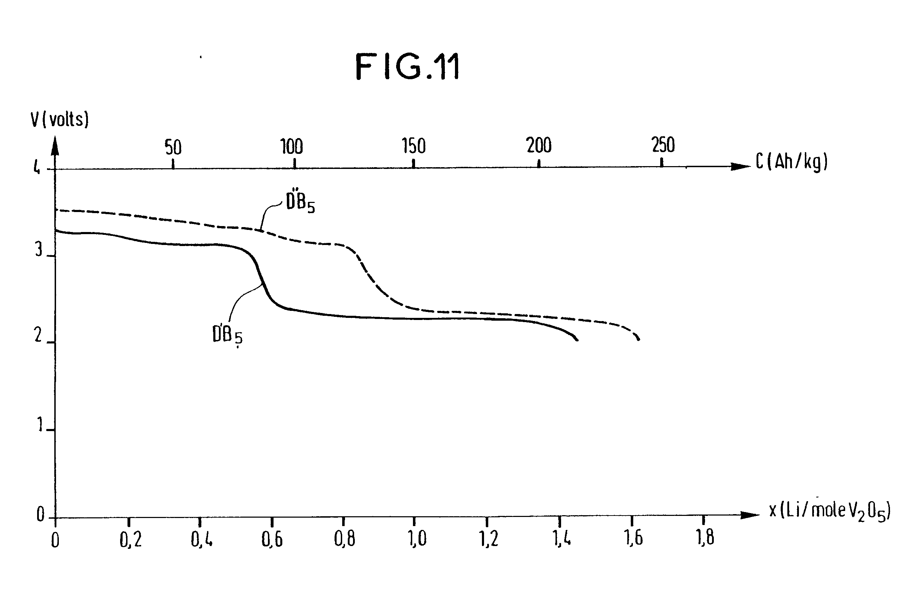

Le bouton a alors été soumis à 2 cycles avec décharge à 2 mA jusqu'à 2 V et charge à 1 mA jusqu'à 3,8 V. La figure 11 représente les caractéristiques $D'B_5$ et $D''B_5$ correspondantes de la 32ème et 33ème décharges. On constate que la première décharge jusqu'à 2 V (32ème décharge du bouton) a pour effet de modifier sensiblement le profil de la décharge suivante (33ème décharge) en augmentant la durée de la décharge, surtout au-dessus de 3 V et en élevant la tension du palier supérieur de décharge. Grâce à cette décharge on a obtenu un bouton $B'_5$ selon l'invention.

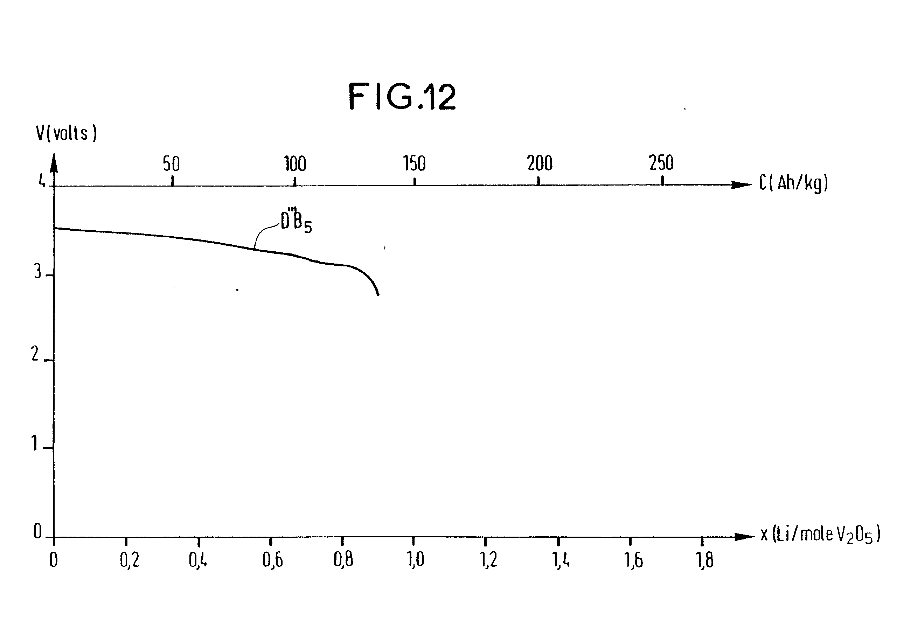

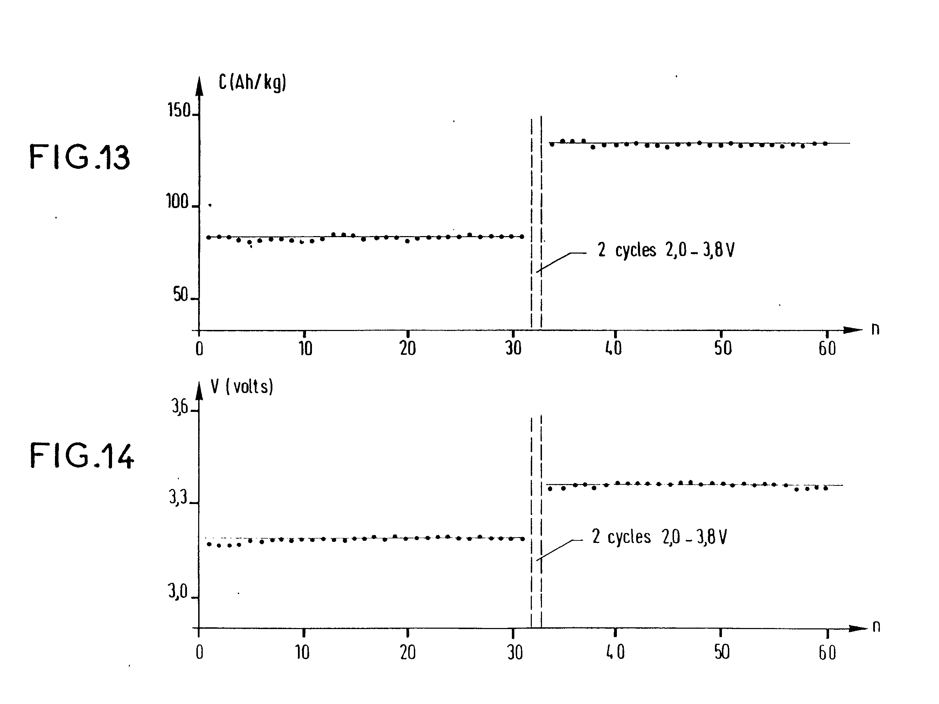

Le cyclage a alors été poursuivi dans la fourchette initiale de tension 2,8 - 3,8 V et l'amélioration constatée en tension et en capacité s'est maintenue comme le montre la figure 12 représentant la caractéristique de décharge $D'''B_5$ du bouton $B'_5$ au 40ème cycle. La capacité spécifique est égale à 135 Ah/Kg et correspond à l'intercalation de 0,91 atome de lithium par mole de $V_2O_5$ et la tension moyenne de décharge est 3,37 V ; avant les 2 cycles de fonctionnement entre 2,0 et 3,8 V, la capacité spécifique était seulement égale à 87 Ah/Kg correspondant à l'intercalation de 0,6 atome de lithium par mole de $V_2O_5$ et la tension moyenne de décharge était 3,19 V. L'amélioration apportée par l'invention apparaît nettement sur les figures 13 et 14 qui représentent respectivement la capacité spécifique et la tension moyenne en décharge au cours d'un cyclage avec arrêt de la décharge à 2,8 V, avant et après les 2 cycles de fonctionnement entre 2,0 et 3,8 V. La décharge sur le palier de 2,3 V suivie d'une recharge complète permet donc non seulement de régénérer la capacité d'un oxyde de vanadium $V_2O_5$ de qualité médiocre, mais encore d'augmenter sa tension moyenne de décharge d'environ 0,2 V.

Bien entendu, l'invention n'est pas limitée aux modes de réalisation qui viennent d'être décrits.

## Revendications

1. Générateur électrochimique rechargeable dont l'anode (2) est à base de lithium ou d'alliage de lithium, dont l'électrolyte est constitué par une solution d'un sel de lithium dans un solvant non aqueux, et dont le matériau cathodique est à base d'oxyde de vanadium cristallisé, caractérisé par le fait que ledit oxyde de vanadium contient une phase $\gamma'$ issue de l'oxydation par voie chimique ou électrochimique d'une phase $LiV_2O_5$ $\gamma$ obtenue par l'insertion dans ledit oxyde d'un nombre d'atomes de lithium par mole de $V_2O_5$ compris entre 0,9 et 2.

2. Générateur électrochimique selon la revendication 1, caractérisé par le fait que ledit matériau cathodique présente en cyclage électrochimique entre 2,0 V et 3,8 V, une capacité d'au moins 0,6 Faraday/mole pour une tension de décharge supérieure à 3,3 V.

3. Générateur électrochimique selon l'une des revendications 1 et 2, caractérisé par le fait qu'en cyclage sa courbe de décharge comporte plusieurs paliers de tension distincts situés au dessus de 3 volts, et un palier de tension situé sensiblement à 2,3 volts.

4. Générateur électrochimique selon la revendication 1, caractérisé par le fait que ledit matériau cathodique présente en cyclage avec une profondeur de décharge limitée, c'est-à-dire inférieure à une valeur de 0,5 Faraday/mole, une tension moyenne de décharge supérieure à 3,5 volts.

5. Générateur électrochimique selon l'une des revendications 1 à 3, caractérisé par le fait que ledit nombre d'atomes de lithium par mole de $V_2O_5$ est le plus près possible de 2.

6. Générateur électrochimique selon l'une des revendications 1 à 5, caractérisé par le fait que ledit électrolyte non aqueux est constitué d'un solvant, choisi parmi les ethers linéaires et cycliques, les esters ou leurs mélanges et d'un soluté choisi parmi $LiAsF_6$, $LiCF_3SO_3$, $LiPF_6$, $LiClO_4$ ou leurs mélanges.

7. Générateur électrochimique selon la revendication 6, caractérisé par le fait que l'électrolyte est une solution de $LiAsF_6$ dans un mélange de carbonate de propylène, de carbonate d'éthylène et de diméthoxyéthane.

8. Procédé de préparation du matériau cathodique du générateur selon l'une des revendications 1 à 7, caractérisé par le fait qu'il consiste à décharger l'oxyde de vanadium $V_2O_5$ dans le générateur à anode de lithium sur le premier palier de décharge en-dessous de 3 V et situé à environ 2,3 V, la tension minimale de décharge n'étant pas inférieure à 2,0 V, et à recharger le matériau jusqu'à 3,8 V.

9. Procédé de préparation du matériau cathodique du générateur selon l'une des revendications 1 à 7, caractérisé par le fait que l'on

traite la phase $LiV_2O_5$ $\gamma$ avec un oxydant, tel que le brome, dans l'acétonitrile.

10. Procédé de régénération in situ de l'oxyde de vanadium formant le matériau cathodique d'un générateur électrochimique rechargeable dont l'anode est à base de lithium ou l'alliage de lithium et dont l'électrolyte est constitué par une solution d'un sel de lithium dans un solvant non aqueux, caractérisé par le fait qu'il consiste à décharger ledit générateur jusqu'à un palier de décharge situé autour de 2,3 V, la tension minimale de décharge n'étant pas inférieure à 2 V, puis à recharger le matériau jusqu'à 3,8 V.

# FIG. 1

# FIG.2

EP 0 432 684 A1

# FIG.3

EP 0 432 684 A1

# FIG.4

EP 0 432 684 A1

FIG.5

EP 0 432 684 A1

# FIG. 6a

# FIG. 6b

# FIG. 6c

# FIG. 6d

FIG. 6e

# FIG.7

EP 0 432 684 A1

EP 0 432 684 A1

# FIG.8

V (volts)

4,0

CB$_4$

3,6

3,2

CB$_3$

2,8

2,4

2,0

0    1    2    3    4    t

# FIG.9

EP 0 432 684 A1

# FIG.10

EP 0 432 684 A1

# FIG.11

EP 0 432 684 A1

# FIG.12

FIG.13

FIG.14

EP 0 432 684 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EXTENDED ABSTRACTS, vol. 89-2, FALL MEETING, Hollywood, Florida, 15-20 octobre 1989, pages 62-63, abrégé no. 44; S. OKADA et al.: "Lithium insertion reaction of crystalline and amorphous V205(-P205) cathodes" <br> * Figure 1; page 62, colonne de gauche, dernier paragraphe - colonne de droite, paragraphe 1; page 62, colonne de gauche, lignes 40-45 * <br> – – – | 1,3,4,5,6, 8 | H 01 M 4 58 <br> H 01 M 4 48 <br> H 01 M 10 40 |
| D,Y | JOURNAL OF POWER SOURCES, vol. 20, 1987, pages 157-164, Elsevier Sequoia, NL; K. WIESENER et al.: "Vanadium oxides in electrodes for rechargeable lithium cells" <br> * Abrégé; page 158, paragraphe 2; figure 2; page 161, dernier paragraphe; page 163, paragraphes 2-3 * <br> – – – | 1,3,4,5,6, 8 | |
| Y | PROCEEDINGS OF THE SYMPOSIUM ON PRIMARY AND SECONDARY AMBIENT TEMPERATURE LITHIUM BATTERIES, Honolulu, 18-23 octobre 1987, vol. 88-6, 1989, pages 503-510, Electrochemical Society, Pennington, US; M. SUGAWARA et al.: "Electrochemical behavior of vanadium(V) oxide in propylene carbonate-Lic104" <br> * Page 506, paragraphe 3; figure 4; page 504, paragraphe 6 * <br> – – – | 1,3,4,5,6, 8 | |
| Y | FR-A-2 629 947  (BRIDGESTONE CORP.) <br> * Exemples comparatifs 4,5; revendications 1,2,5,6 * <br> – – – | 1,3,4,5,6, 8 | |
| A | PROCEEDINGS OF THE SYMPOSIUM ON PRIMARY AND SECONDARY AMBIENT TEMPERATURE LITHIUM BATTERIES, Honolulu, 18-23 octobre 1987, vol. 88-6, pages 494-502, Electrochemical Society, Pennington, US; J. LABAT et al.: "Oxide based intercalation compounds for organic electrolyte rechargeable lithium cells" <br> * Page 495, paragraphe 1, point 3.1; page 496, dernier paragraphe; page 497, point 4.2; figure 10 * <br> – – – <br> – . – | 1,6 | |

DOMAINES TECHNIQUES RECHERCHES (Int. Cl.5)

H 01 M

Le présent rapport de recherche a été établi pour toutes les revendications

| Lieu de la recherche | Date d'achèvement de la recherche | Examinateur |
|---|---|---|
| La Haye | 14 mars 91 | D'HONDT J.W. |

**Office européen
des brevets**

# RAPPORT DE RECHERCHE
# EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | ELECTROCHIMICA ACTA, vol. 33, no. 7, 1988, pages 997-1002, Pergamon Press, Plc, GB; S. HUB et al.: "X-ray investigations on electroformed $Li_xV_2O_5$ bronzes"<br>* Abrégé; page 997, colonne de droite, paragraphe 2; page 998, colonne de gauche, paragraphe 1; page 1000, colonne de gauche, dernier paragraphe; figure 5; page 1001, colonne de gauche, page 1002, colonne de gauche, dernier paragraphe *<br>– – – | 1,8 | |
| A | FR-A-2 615 657  (BRIDGESTONE CORP.)<br>* Exemple comparatif, page 13; exemples 6,7,8 *<br>– – – | 1,16 | |
| A | JOURNAL OF POWER SOURCES, vol. 24, 1988, pages 85-93, Elsevier Sequoia, NL; A. TRANCHANT et al.: "A comparative electrochemical study of $MoO_3$, $V_2O_5$ and $MoV_2O_8$ as rechargeable cathodes in lithium cells"<br>– – – | | |
| A | US-A-4 874 680  (N. KOSHIBA)<br>– – – – – | | |

DOMAINES TECHNIQUES
RECHERCHES (Int. Cl.5)

Le présent rapport de recherche a été établi pour toutes les revendications

| Lieu de la recherche | Date d'achèvement de la recherche | Examinateur |
|---|---|---|
| La Haye | 14 mars 91 | D'HONDT J.W. |